# EUROPEAN PATENT APPLICATION

(11) **EP 1 143 089 A2**
(43) Date of publication of application: **10.10.2001**
(21) Application number: 01302768.5
(22) Date of filing: 26.03.2001
(51) Int. Cl.: E05B 49/00

(54) **Method for remote keyless entry based on proximity**

(30) Priority: 05.04.2000 US 543430
(71) Applicant: Meritor Light Vehicle Systems, Inc., Troy, Michigan 48084 (US)
(72) Inventor: Chien, Charles, Thousand Oaks California 91358-0085 (US)
(74) Representative: Jones, John Bryn

(57) **Abstract**

The present invention is directed to a method for controlling access based on a radio frequency signal, the method including receiving a signal from a source and analyzing the received signal. The proximity of the source of the signal is determined, in which the proximity of the source of the signal is suitable for being utilized to control access to the controlled access point. In a second aspect of the present invention, an apparatus for controlling access based on a radio frequency signal includes a receiver for receiving a radio frequency signal from a radio frequency source. A channel processor is coupled to the receiver, the channel processor suitable for analyzing the received signal and determining the proximity of the radio frequency source. A securing device is coupled to the processor, the securing device suitable for controlling access to a controlled access point wherein the securing device is suitable for being utilized to at least one of secure and unsecure the securing device based on the determined proximity of the radio frequency source.

## Description

### BACKGROUND OF THE INVENTION

Remote keyless entry (RKE) typically requires a user to press a button on a remote keyless entry device to unlock and/or lock a door. This method may make it difficult for a user to enter and exit a controlled point of access, such as a vehicle, premises, and the like, when the user is otherwise occupied. For example, a user may wish to open a car door when the user's hands are full. Utilizing previous methods, the user would have to locate and press a button to gain access to the vehicle, necessitating at least one free hand. Thus, employing previous methods, the user is hindered by the requirement of keeping one hand free to operate the remote keyless entry system on the car.

One method utilized to address this problem involved radio frequency signals to control a locking mechanism. While the use of a radio frequency tag permitted a user to gain access without the necessity of pressing a button, this method relied on the presence or absence of a defined radio frequency signal. Typically, if the signal was present the locking mechanism would disengage and in the absence of the signal the locking mechanism would engage. Thus, this method was unable to differentiate between a different proximity and trajectory of the user. For example, the previous method was unable to differentiate as to whether the user was approaching or retreating from the car, therefore indicating whether the user wanted the securing mechanism locked or unlocked, or between various proximity's of the user from the car. This inability to differentiate may cause the door to be unlocked, due to the presence of the signal, in situations where it may be desirable to lock the vehicle, thereby permitting unwanted access to the vehicle.

Thus, it would be desirable to provide a system and method of remote keyless entry wherein the proximity and/or trajectory of a user may be utilized to control a securing mechanism.

### SUMMARY OF THE INVENTION

Accordingly, the present invention is directed to a system and method for remote keyless entry based on radio frequency signature. In a first aspect of the present invention, a method for controlling access based on a trajectory includes receiving a signal from a source and analyzing the received signal. A trajectory of the source of the signal is determined. Access to a controlled access point is controlled wherein the trajectory of the source of the signal is suitable for being utilized to control access to the controlled access point.

In a second aspect of the present invention a method for controlling access based on a radio frequency signal includes receiving a radio frequency signal from a radio frequency source and analyzing the received radio frequency signal. The proximity of the source of the radio frequency signal is determined, in which the proximity of the source of the radio frequency signal is suitable for being utilized to control access to the controlled access point.

In a third aspect of the present invention, an apparatus for controlling access based on a radio frequency signal includes a receiver for receiving a radio frequency signal from a radio frequency source. A channel processor is coupled to the receiver, the channel processor suitable for analyzing the received signal and determining the proximity of the radio frequency source. A securing device is coupled to the processor, the securing device suitable for controlling access to a controlled access point wherein the securing device is suitable for being utilized to at least one of secure and unsecure the securing device based on the determined proximity of the radio frequency source.

It is to be understood that both the forgoing general description and the following detailed description are exemplary and explanatory only and are not restrictive of the invention as claimed. The accompanying drawings, which are incorporated in and constitute a part of the specification, illustrate an embodiment of the invention and together with the general description, serve to explain the principles of the invention.

### BRIEF DESCRIPTION OF THE DRAWINGS

The numerous advantages of the present invention may be better understood by those skilled in the art by reference to the accompanying figures in which:
FIG. 1 is an illustration of an exemplary embodiment of the present invention wherein the proximity of a radio frequency source from a controlled access point is suitable for being utilized to control access to the controlled access point;
FIG. 2 is a flow diagram depicting an exemplary method of the present invention wherein access is controlled to a controlled access point based on the proximity of a radio frequency source to the controlled access point;
FIG. 3 is an illustration of an exemplary embodiment of the present invention wherein the proximity of a radio frequency source from a controlled access point is determined by the behavior of a received radio frequency signal waveform;
FIG. 4 is a flow diagram depicting an exemplary method of the present invention wherein the behavior of a received radio frequency signal waveform is utilized to determine a proximity of a radio frequency source to the controlled access point;
FIG. 5 is an illustration of an exemplary embodiment of the present invention wherein the trajectory of a radio frequency source is utilized to control access to a controlled access point;
FIG. 6 is a flow diagram depicting an exemplary method of the present invention wherein a determined trajectory of a radio frequency source is utilized to control access to a controlled access point; and
FIG. 7 is an illustration of an exemplary embodiment of the present invention wherein a trajectory is utilized to control access to a specific controlled access point among a plurality of controlled access points.

### DETAILED DESCRIPTION OF THE INVENTION

Reference will now be made in detail to the presently preferred embodiments of the invention, examples of which are illustrated in the accompanying drawings.

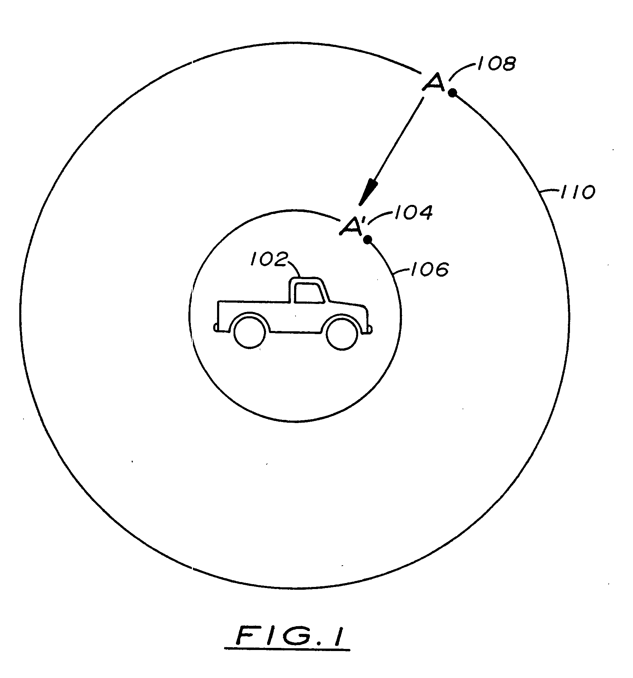

Referring generally now to FIGS. 1 through 7, exemplary embodiments of the present invention are shown. Remote keyless entry (RKE) of the present invention may be accomplished by determining the proximity and/or trajectory of a user from a controlled access point. A controlled access point may include a vehicle, such as a car, truck, and tractor-trailer, a location, such as a point of access on a structure, and the like as contemplated by a person of ordinary skill in the art. Although the determination of the proximity of a user through radio frequency signals is described, it should be apparent that a variety of methods utilized to determine proximity may be employed by the present invention yet not depart from the spirit and scope thereof, such as ultrasonic, and the like.

Referring now to FIG. 1, an embodiment of the present invention is shown wherein a user is positioned at various proximities from a controlled access point. A controlled access point, in this instance a vehicle 102, is positioned away from a user. A remote keyless entry (RKE) system included in the vehicle 102 determines the proximity of the user from the vehicle. For example, the remote keyless entry system may determine that a user 104 is at a first proximity 106 from the vehicle 102 and therefore enable access to the vehicle. However, if the remote keyless entry system determines that a user 108 is at a second proximity 110, which may be further away from the vehicle 102, the remote keyless entry system may secure the vehicle 102 to prevent unauthorized access.

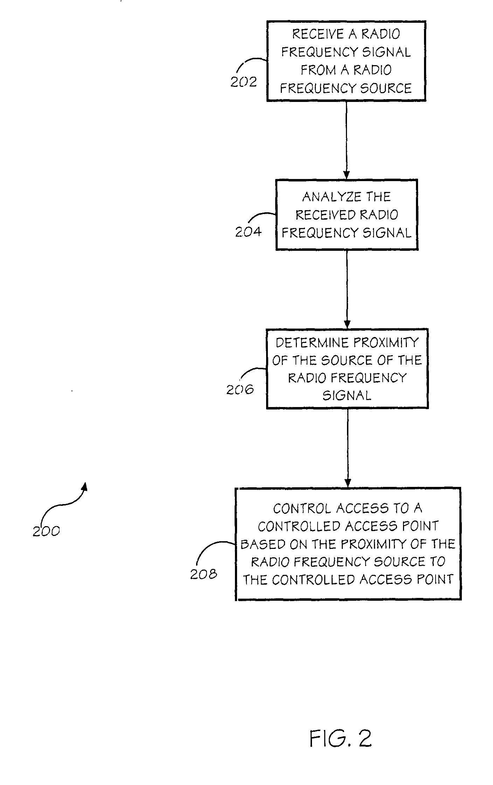

Referring now to FIG. 2, a flow diagram depicting an exemplary method 200 of the present invention is shown. A radio frequency signal is received from a radio frequency source 202. A radio frequency source may include both active and passive radio frequency transmitters and tags that may be associated with a user, such as a person or object. For example, a radio frequency source may return a signal when queried by the controlled access point, continuously send out a signal, and the like as contemplated by a person of ordinary skill in the art. The received radio frequency signal is analyzed 204 and the proximity of the source of the radio frequency signal is determined 206. Proximity may include a radial distance 106 and 110 (FIG. 1) of the radio frequency source 104 and 108 (FIG. 1) from the controlled access point 102 (FIG. 1), a terminal point of a vector indicating a specific position, a coordinate point, and any other method of locating and describing a position as contemplated by a person of ordinary skill in the art. Thus, access may be controlled to a controlled access point based on the proximity of the radio frequency source to the controlled access point 208. Controlling access may include securing and unsecuring a locking mechanism, indicating the presence of a user, and the like without departing from the spirit and scope of the present invention. Further, it may be preferable to utilize a unique identifier to differentiate and control access for a plurality of sources. For example, a signal may include a unique identifier to differentiate that source from a second source, so that the identifier may be associated with a corresponding controlled access point.

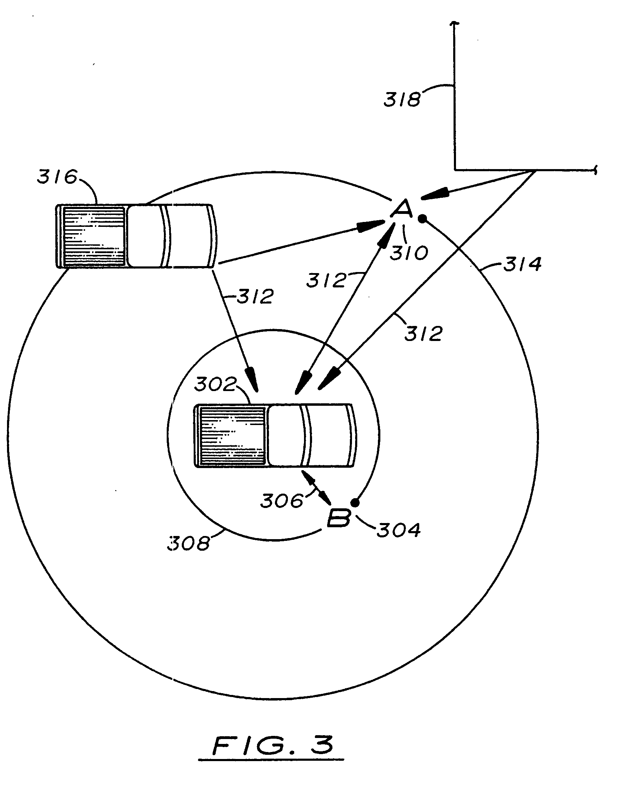

Referring now to FIG. 3, an embodiment of the present invention is shown wherein proximity may be determined by the behavior of a radio frequency waveform. Depending on where the user is located from the controlled access point, the behavior of a radio frequency signal may change. Therefore, the changing behavior of the received radio frequency waveforms may be utilized to indicate the proximity of the radio frequency source. A vehicle 302 in close proximity to a user 304 may have a line-of-sight (LOS) signature 306 indicating a close radial location 308 of the user 304 to the vehicle 302. However, a user 310 at a further proximity from the vehicle 302 may have a multipath signature 312 indicating a greater radial distance 314. A multipath signature refers to a signal reaching a point following two or more paths. For example, delayed versions of the same signal may be received due to signals reflected from surfaces surrounding the radio frequency source and the radio frequency receiver, such as an additional vehicle 316, building; 318, and the like. An apparatus for controlling access based on a radio frequency signal includes a receiver for receiving a radio frequency signal from a radio frequency source. A channel processor is coupled to the receiver, the channel processor suitable for analyzing the received signal and determining the proximity of the radio frequency source. A securing device is coupled to the processor, the securing device suitable for controlling access to a controlled access point wherein the securing device is suitable for being utilized to at least one of secure and unsecure the securing device based on the determined proximity of the radio frequency source.

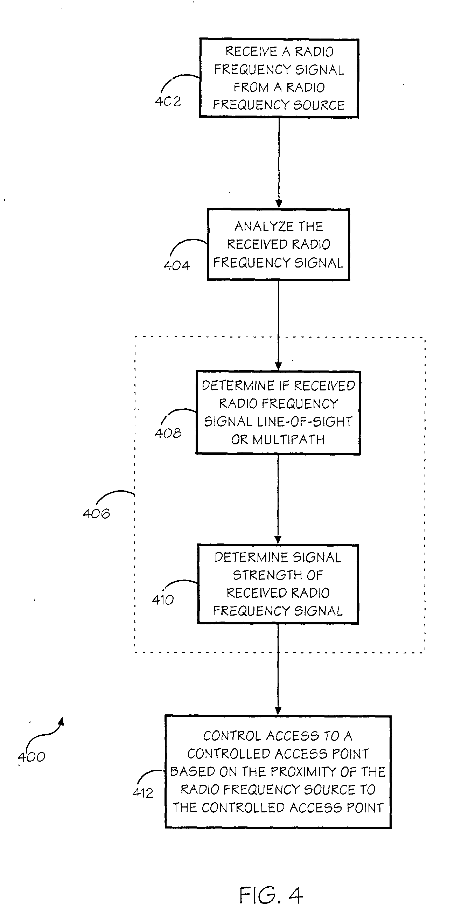

Referring now to FIG. 4, a flow diagram depicting an exemplary method 400 of the present invention is shown wherein the behavior of a waveform is utilized to determine proximity of a radio frequency source to a controlled access point. A radio frequency signal is received from a radio frequency source 402. The received radio frequency signal is analyzed 404 and the proximity of the source of the radio frequency signal is determined 406. Determining the proximity of the radio frequency source may include determining if the received radio frequency signal is a line-of-sight (LOS) signal or a multipath signal 408. A line-of sight (LOS) signal may indicate that the radio frequency source is located closer to the controlled access point than a multipath signal. The signal strength of the received radio frequency signal may also be determined 410 to derive the proximity of the radio frequency source. Thus, access to a controlled access point may be based on the proximity of the radio frequency source 412. It may be desirable to utilize a method for resolving conflicts between two or more radio frequency sources so as to enable the system to operate while a plurality of radio frequency sources are present, such as spread-spectrum multiple access, random multiple access, and the like.

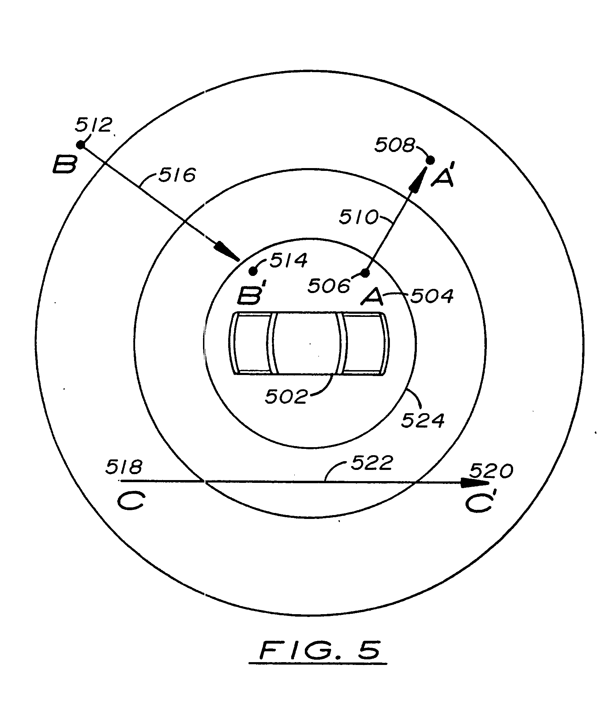

Referring now to FIG. 5, an exemplary embodiment of the present invention is shown wherein the trajectory of a radio frequency source is utilized to control access to a controlled access point. A vehicle 502 is positioned away from a user. A remote keyless entry (RKE) system included in the vehicle 502 determines the trajectory of the user from the vehicle. For example, the remote keyless entry system may determine that a user 504 is at a first proximity 506 from the vehicle 502 and has moved to a second proximity 508 from the vehicle 502. A trajectory 510 may be determined for the user indicating that the user is moving away from the vehicle 502. Therefore, it would be desirable to control access to the vehicle 502 by securing the vehicle 502 thereby preventing unwanted access.

Additionally, the remote keyless entry (RKE) system may determine that the user is moving toward the vehicle and thereby permit access. For example, the remote keyless entry system may determine that the user has traveled from a first proximity 512 to second proximity 514, the second proximity being closer to the vehicle 502 than the first proximity 512. Thus, the remote keyless entry (RKE) system may determine that the user is approaching 516 the vehicle and thereby permit access. In this way, the present invention may control access to the vehicle based on the trajectory of the user, thereby enabling the system to control access in a more time efficient manner. For example, the current system may determine instantly after a user leaves the vehicle that the user is progressing away from the vehicle and thereby secure the vehicle from intrusion.

A threshold proximity may also be combined with a trajectory to further control access to a controlled access point. For example, it may be desirable to not only detect if a user is approaching or retreating from a controlled access point, but to also control access when the user is within a certain proximity of the vehicle. A user may travel from a first proximity 518 to a second proximity 520 on a trajectory 522 that remains beyond a threshold proximity 524 from the vehicle 502. Therefore, it may be desirable to keep the vehicle 502 secured until a user passes within the threshold proximity 524.

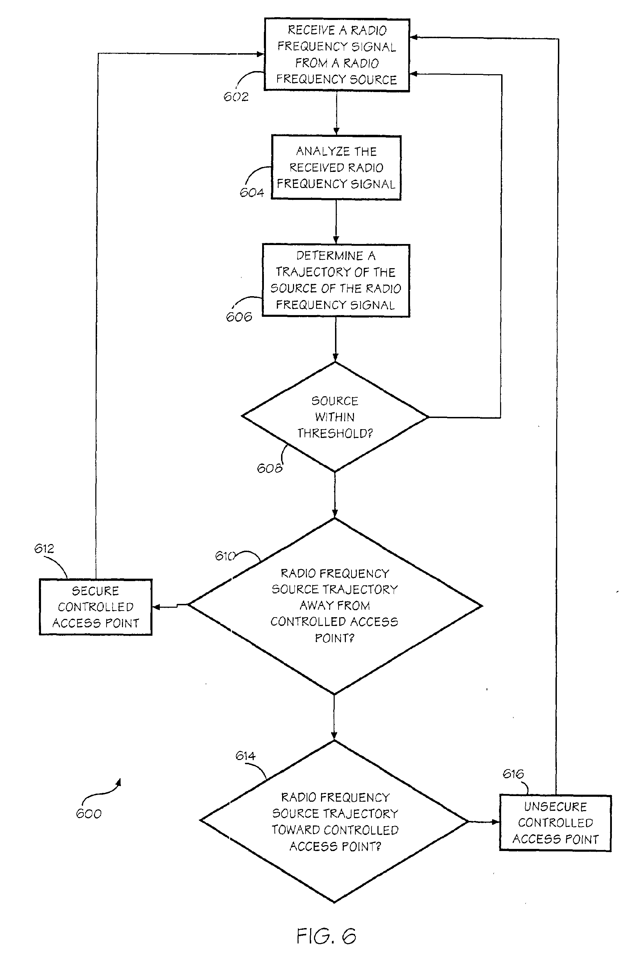

Referring now to FIG. 6, an exemplary method 600 of the present invention is shown wherein a determined trajectory of a radio frequency source is utilized to control access to a controlled access point. A radio frequency signal is received from a radio frequency source 602. The received radio frequency signal is analyzed 604 and a trajectory of the source of the radio frequency signal is determined 606. Further, it may also be desirable to determine whether the source of the radio frequency signal is within threshold proximity 608, as described in FIG. 5. Thus, if the determined radio frequency source trajectory indicates a trajectory away from the controlled access point 610, the access point is secured 612. However, if the determined radio frequency source trajectory source trajectory is away from the controlled access point 614, the controlled access point is unsecured 616.

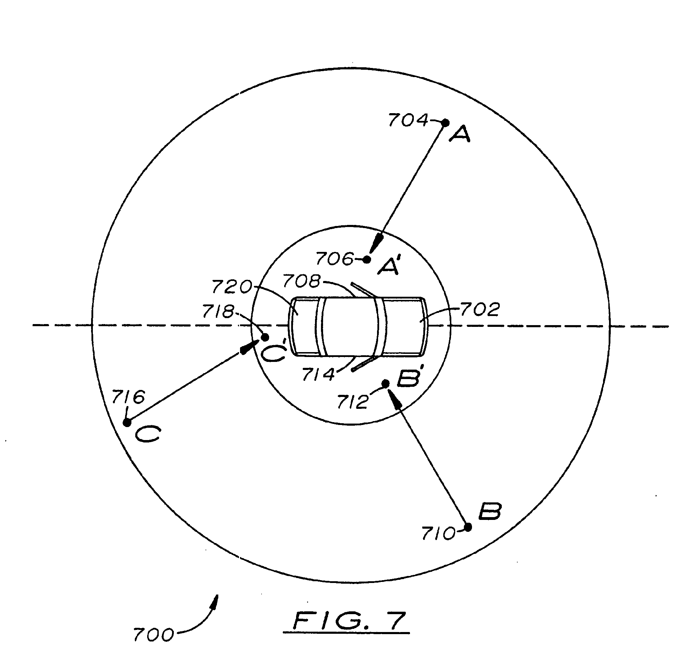

The trajectory of a user may also be utilized to control access to a specific controlled access point among a plurality of controlled access points. For example, as shown in FIG. 7, an embodiment 700 including a plurality of controlled access points is controlled according to a determined trajectory. A vehicle 702 may include a variety of controlled access points 708, 714 and 720. Thus, it may be desirable to control access to the controlled access point corresponding to the user's trajectory. For instance, a user progressing from a first proximity 704 to a second proximity 706 toward a controlled access point 708, in this instance a driver's side door on the vehicle 702, may wish to have that controlled access point 708 unsecured yet have the other controlled access points 714 and 718 remain secured. Likewise, a user traveling toward the vehicle 702 from a first proximity 710 to a second proximity 712 indicating a trajectory toward another controlled access point 714, in this instance a passenger's side door, may cause the remote keyless entry system of the present invention to unsecure both the passenger and driver side door. Further, a trajectory from a first proximity 716 to a second proximity 718 to an additional controlled access point 720, in this instance a trunk compartment of the vehicle 702, may initiate the unlocking of the trunk for access by the user. In this way, the present invention may further secure the vehicle by permitting access to an authorized user to a controlled access point indicated by the trajectory of the user yet prevent access to other controlled access points. Further, it may also be desirable to utilize a power management scheme wherein a controlled access point queries for a signal from a signal source periodically so as not to remain on and thereby conserve power. For example, the controlled access point may turn on every 5 seconds, determine if there is an available signal, and if not, turn off so as to limit power consumption.

It is believed that the method for remote keyless entry based on radio frequency signature of the present invention and many of its attendant advantages will be understood by the forgoing description. It is also believed that it will be apparent that various changes may be made in the form, construction and arrangement of the components thereof without departing from the scope and spirit of the invention or without sacrificing all of its material advantages. The form herein before described being merely an explanatory embodiment thereof. It is the intention of the following claims to encompass and include such changes.

## Claims

1. A method for controlling access based on a radio frequency signal, comprising:
receiving a radio frequency signal from a radio frequency source:
analysing the received radio frequency signal;
determining a first proximity and a second proximity of the source of the radio frequency; and
controlling access to a controlled access point;
wherein the first proximity and the second proximity of the source of the radio frequency signal is suitable for being utilised to control access to the controlled access point.

2. An apparatus for controlling access based on a radio frequency signal, comprising:
a receiver for receiving a radio frequency signal from a radio frequency source;
a channel processor coupled to the receiver, the channel processor suitable for analysing the received signal and determining a first proximity and a second proximity of the radio frequency source;
a securing device coupled to the processor, the securing device suitable for controlling access to a controlled access point wherein the securing device is suitable for being utilised to at least one of secure and unsecure the securing devices based on the determined first proximity and second proximity of the radio frequency source.

3. The method or system as described in any preceding claim wherein the controlled access point includes at least one of a vehicle and premises.

4. The method or system as described in any preceding claim wherein proximity is determined by behaviour of the received radio frequency signal waveform.

5. The method or system as described in claim 4 wherein the first proximity is indicated by a line-of-sight signature waveform and the second proximity is indicated by a multipath waveform.

6. The method or system as described in claim 5 wherein the first proximity indicates a closer proximity to the controlled access point than the second proximity.

7. The method or system as described in any preceding claim wherein proximity is determined by strength of the radio frequency signal.

8. The method or system as described in any preceding claim wherein proximity includes radial location of the source of the radio frequency to the controlled access point.

9. The method or system as described in any preceding claim wherein the first determined proximity and the second determined proximity are utilised to determine a trajectory.

10. The method or system as described in claim 9 wherein the trajectory indicates at least one of movement away from the controlled access point, the access point is secured, and the trajectory indicates movement toward the controlled access point, the access point is unsecured.

11. The method or system as described in any preceding claim wherein a first radio frequency source provides a first radio frequency signal and a second radio frequency source provides a second radio frequency signal, receiving the first radio frequency signal and the second radio frequency signal includes at least one of spread-spectrum multiple access and random multiple access.

12. The method or system as described in any preceding claim wherein a first radio frequency source provides a first radio signal and a second radio frequency source provides a second radio frequency signal, the receiver utilises at least one of spread-spectrum multiple access and random multiple access.

13. The method or system as described in any preceding claim wherein the radio frequency signal includes an identifier capable of being used to identify the radio frequency source to the controlled access point so as to enable the controlled access point to control access based upon the identity of the radio frequency source.

14. The method or system as described in any preceding claim further comprising a second controlled access point, wherein the proximity of the source is utilised to enable access to the first controlled access point but not the second controlled access point.

15. The method or system as described in any preceding claim further comprising determining whether the source is within a threshold proximity, the threshold proximity suitable for being utilised to control access to the controlled access point.

16. A method for controlling access based on a trajectory, comprising:
receiving a signal from a source;
analysing the received signal;
determining a trajectory of the source of the signal; and
controlling access to a controlled access point;
wherein the trajectory of the source of the signal is suitable for being utilised to control access to the controlled access point.

17. The method as described in claim 16 wherein controlled access point includes at least one of a vehicle and premises.

18. The method as described in claim 16 or 17 wherein trajectory is determined by behaviour of a received radio frequency signal waveform.

19. The method as described in claim 16 to 18 wherein a first proximity is indicated by a line-of-sight signature waveform and a second proximity is indicated by a multipath waveform so that an indicated change of the radio requency source including at least one of movement from the first proximity to the second proximity and movement from the second proximity to the first proximity is capable of being utilised to indicate the trajectory.

20. The method as described in claim 19 wherein the first proximity indicates a closer proximity to the controlled access point than the second proximity, so a change from the first proximity to the second proximity is utilised to secure the controlled access point and a chnage from the second proximity to the first proximity is utilised to unsecure the controlled access point.

21. The method as described in claim 20 wherein trajectory is determined by strength of the received signal.

22. The method as described in claim 16 to 21 wherein the trajectory includes a radial trajectory of the source of the signal to the controlled access point.

23. The method as described in claim 16 to 22 wherein determining a trajectory includes determining a first proximity of the source of the signal and a second proximity of the source of the signal, wherein a change of the source of the signal of the first determined proximity to the second determined proximity are utilised to determine a trajectory.

24. The method as described in claim 23 wherein the trajectory indicates at least one of movement away from the controlled access point, the access point is secured, and the trajectory indicates movement toward the controlled access point, the access point is unsecured.

25. The method as described in claim 16 to 24 wherein a first radio frequency source provides a first radio frequency signal and a second radio frequency source provides a second radio frequency signal, receiving the first radio frequency signal and the second radio frequency signal includes at least one of spread-spectrum multiple access and random multiple access.

26. The method as described in claim 16 to 25 wherein the signal includes an identifier capable of being used to identify the source to the controlled access point so as to enable the controlled access point to control access based upon the identity of the radio frequency source.

27. The method as described in claim 16 to 26 further comprising a second controlled access point, wherein the proximity of the source is utilised to enable access to the first controlled access point but not the second controlled access point.

28. The method or system as described in claim 27 further comprising determining whether the source is within a threshold proximity, the threshold proximity is suitable for being utilised to control access to the controlled access point.
